**Europäisches Patentamt**

**European Patent Office**

**Office européen des brevets**

(11) Veröffentlichungsnummer: **0 239 034**
**B1**

(12) **EUROPÄISCHE PATENTSCHRIFT**

(45) Veröffentlichungstag der Patentschrift:
31.05.89

(51) Int. Cl.⁴: **F16H 57/02**, F16D 1/06

(21) Anmeldenummer: **87104142.2**

(22) Anmeldetag: **20.03.87**

(54) Verbindungsvorrichtung für mindestens zwei lösbar miteinander verspannbare Teile.

(30) Priorität: **25.03.86 US 843547**

(43) Veröffentlichungstag der Anmeldung:
**30.09.87 Patentblatt 87/40**

(45) Bekanntmachung des Hinweises auf die Patenterteilung:
**31.05.89 Patentblatt 89/22**

(84) Benannte Vertragsstaaten:
**AT DE FR GB IT NL SE**

(56) Entgegenhaltungen:
**DE-A- 3 330 330**
**DE-C- 3 042 388**
**FR-A- 2 441 769**
**US-A- 1 348 667**

(73) Patentinhaber: **DEERE & COMPANY, 1 John Deere Road, Moline Illinois 61265(US)**

(72) Erfinder: **Koltookian, Sarkis Aram, 1218 Bauch Street, Waterloo Iowa 50701(US)**

(74) Vertreter: **Feldmann, Bernhard, DEERE & COMPANY European Office, Patent Department Steubenstrasse 36-42 Postfach 503, D-6800 Mannheim 1(DE)**

## Beschreibung

Die Erfindung bezieht sich auf eine Verbindungsvorrichtung für mindestens zwei lösbar miteinander verspannbare Teile, wobei bei wenigstens zwei Teilen die sich einander zugelegenen Verbindungsflächen mit Profil versehen sind.

Bei der Verbindungsvorrichtung, von der die Erfindung ausgeht (US-A-1 348 667), handelt es sich um die Verbindung von Flanschen zweier Rohre. Beide Flansche sind dazu an zwei einander zugekehrten Seiten ganzflächig granuliert und werden mit Schrauben gegeneinander gepreßt. Die granulierten Kontaktflächen sollen dabei verhindern, daß sich die beiden Teile relativ zueinander bewegen können, nachdem sie miteinander verspannt sind, so daß eine gute Verbindung ohne unangenehme Spannungen in den Schrauben und den Flanschen entsteht. Da sich aber die durch Aufrauhen der Oberflächen entstehenden Granulate während des Verspannens bleibend verformen, ist bei einem erneuten Verbinden beider Teile eine jegliche Relativbewegung ausschließende Verspannung nicht mehr gegeben.

Bei einer weiteren bekannten Verbindungsvorrichtung (DE-A 3 330 330) zwischen einer Welle an der Nabe einer Riemenscheibe ist zwischen die gegeneinander verspannten Verbindungsflächen eine mit einer feinen Rändelung versehene Scheibe aus gehärtetem Stahl vorgesehen, so daß die Rändelungen in die Verbindungsflächen eindringen.

Die mit der Erfindung zu lösende Aufgabe wird darin gesehen, eine Verbindungsvorrichtung zu schaffen, die auch nach mehrmaligem Lösen und wieder Verbinden Relativbewegungen der miteinander zu verspannenden Teile ausschließt.

Diese Aufgabe ist nach der Erfindung durch einen Scherkörper mit im wesentlichen glatten Stirnflächen und einer geringeren Härte als die Profile gelöst worden, wobei im verspannten Zustand die Stirnflächen gegen die Verbindungsflächen anliegen und die Profile zumindest teilweise in den Scherkörper eindringen. Damit weisen die Profile eine größere Härte als der Scherkörper auf, so daß sie sich beim gegenseitigen Verspannen nicht verformen und für eine erneute Verbindung voll einsatzfähig sind. Bei einer erneuten Verbindung bräuchte dann lediglich der Scherkörper erneuert zu werden, was mit einem relativ geringen Kostenaufwand bei Erreichung des angestrebten Zweckes möglich ist.

In einfacher Weise kann erfindungsgemäß das gegenseitige Verspannen über Schrauben erfolgen, die dann durch den Scherkörper geführt sind, der hierzu entsprechende Bohrungen aufweist.

Erfindungsgemäß können die Profile im wesentlich unverformbar und durch Aufrauhen der Verbindungsfläche herstellbar sein. Selbstverständlich können im Rahmen der Erfindung die Profile auch durch andere äquivalente Maßnahmen, wie sie jedem Fachmann geläufig sind, erreicht werden. Zweckmäßig soll die Rauhtiefe zwischen 500 und 1000 Mikrozoll betragen.

Die erfindungsgemäße Verbindungsvorrichtung kommt dann besonders wirksam zur Geltung, wenn sie bei Teilen eingesetzt wird, die Torsionskräften, die ein leichtes Abscheren der Schrauben bewirken könnten, ausgesetzt sind. In einem solchen Fall ist die aufgerauhte Verbindungfläche an dem einen Teil als eine Radialfläche eines Ringrades und die aufgerauhte Verbindungsfläche des anderen Teiles als eine Gegenfläche an einem Lagergehäuse für das Ringrad ausgebildet. Im Arbeitseinsatz dabei auftretende Tendenzen zu Relativbewegungen zwischen dem Ringrad un dem Lagergehäuse werden dann durch den Scherkörper aufgefangen, so daß die Schrauben entsprechend kleiner dimensioniert werden können. Wenn das Ringrad ferner noch an seiner dem Lagergehäuse abgelegenen Seite mit einem Ringflansch verspannt ist, so kann auch zwischen dieser Verspannung noch ein zusätzlicher Scherkörper vorgesehen sein, sofern die Kräfte entsprechend groß sind. Bei kleineren Kräften kann dieser zusätzliche Scherkörper entfallen.

Wenn der Scherkörper aus Aluminium und die miteinander zu verspannenden Teile aus Stahl hergestellt werden, dann weist der Scherkörper eine geringere Härte als die miteinander zu verbindenden Teile auf, so daß deren Profile leicht in den Scherkörper eindringen können.

In der Zeichnung ist ein nachfolgend näher erläutertes Ausführungsbeispiel der Erfindung dargestellt. Es zeigt:

Fig. 1 einen Teil eines Differentials mit der erfindungsgemäßen Verbindungsvorrichtung
Fig. 2 einen Scherkörper und
Fig. 3 die Verbindungsvorrichtung im Ausschnitt und gegenüber Fig. 1 im vergrößerten Maßstab.

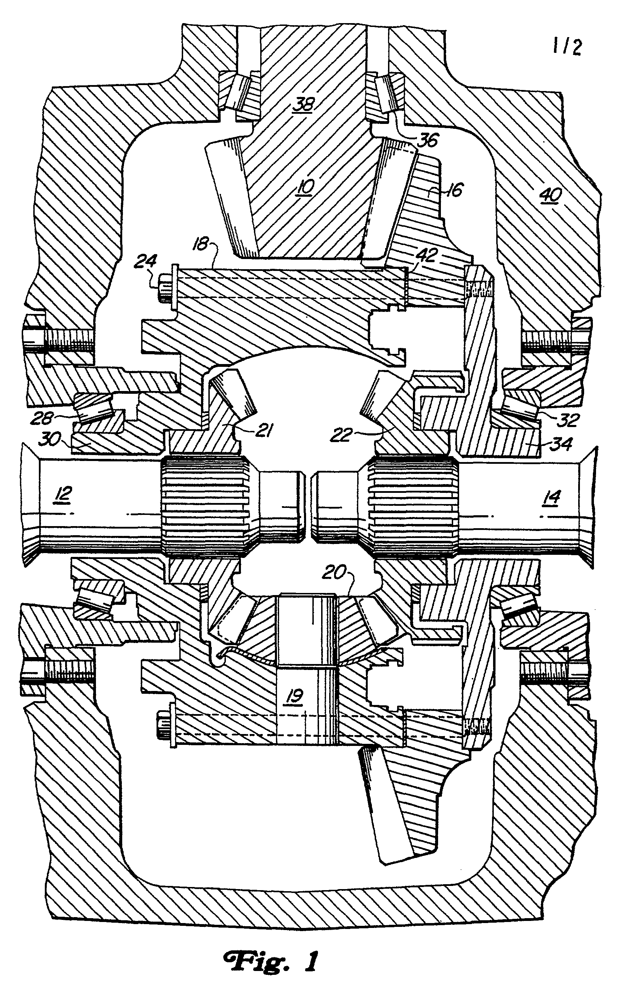

Fig. 1 zeigt einen Ausschnitt aus einem Differentialgehäuse eines Fahrzeuggetriebes, wobei der Antriebszug von einem Antriebsritzelrad 10 zu einem Paar Ausgangswellen 12 und 14 gelangt. Dabei wird der Antrieb von dem Antriebsritzel 10 auf die Ausgangswellen 12 und 14 über ein Ringrad 16, ein Lagergehäuse 18, ein Differentialritzel 20, das drehbar auf einer Welle 19 angeordnet ist, und zwei Ausgangsritzel 21 und 22 übertragen. Die erfindungsgemäße Verbindungsvorrichtung wird im vorliegenden Beispiel zu der Verbindung des Ringrades 16 mit dem Lagergehäuse 18 durch Einsetzen eines Scherkörpers 42 zwischen dem Ringrad und dem Lagergehäuse verwendet. Im einzelnen ist das Ringrad 16 mit seinem Lagergehäuse 18 über Schauben 24 verspannt, die sich durch das Lagergehäuse 18, den Scherkörper 42 und das Ringrad 16 bis zu einem Ringflansch 26 erstrecken.

Die Ausgangsritzel 21 und 22 führen die Ausgangswellen 12 und 14 und sind ihrerseits wiederum in dem Lagergehäuse 18 und dem Ringflansch 26 angeordnet. Das Antriebsritzel 10, das Lagergehäuse 18 und der Ringflansch 26 sind in einem Achsgehäuse 40 durch Lager 36, 28 und 32 angeordnet, deren äußere Lagerringe in dem Achsgehäuse 40 eingesetzt sind.

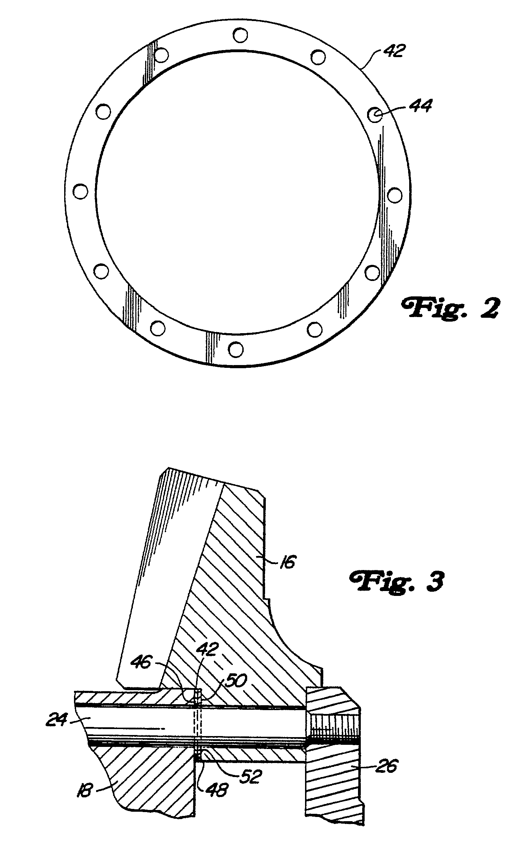

Der innere Lagerring des Lagers 28 ist auf einem Hülsenteil 30 des Lagergehäuses 18 aufgesetzt und der innere Lagerring des Lager 32 sitzt auf einem Hülsenteil 34 des Ringflansches 26 auf. Der innere Lagerring des Lagers 36 ist auf einer Ritzelwelle 38 aufgesetzt, die ihrerseits mit dem Antriebsritzel 10 verbunden ist und dieses antreibt. Wie aus den Fig. 1 und 3 hervorgeht, so ist der zweckmäßig als Ringscheibe ausgebildete Scherkörper 42 zwischen dem Lagergehäuse 18 und dem Ringrad 16 in Sandwichform angeordnet und verhindert eine Relativdrehung zwischen diesen beiden Elementen. Wie aus Fig. 2 hervorgeht, so besteht der Scherkörper 42 aus einem Ring mit im gleichen Abstand vorgesehenen Bohrungen 44, durch die die Schrauben 24 geführt sind. Fig. 3 zeigt im größeren Maßstab einen Ausschnitt aus der Verbindungsvorrichtung des Lagergehäuses 18 und dem Ringrad 16, und es ist erkennbar, daß der Scherkörper 42 relativ flach ausgebildet ist, wobei seine eine Stirnfläche 46 gegen eine Verbindungsfläche 48 an der flachen Seite des Lagergehäuses 18 anliegt, während seine gegenüberliegende Stirnfläche 50 gegen eine Verbindungsfläche 52 anliegt, die an der gegenüberliegenden Seite des Ringrades 16 vorgesehen ist. Die Verbindungsflächen 48 und 52 sind auf ihrer ganzen Oberfläche mit Profilen versehen, die beispielsweise durch Aufrauhen der Oberfläche hergestellt sein können und eine Rauhtiefe zwischen 500 und 1000 Mikrozoll aufweisen. Der Scherkörper kann aus jeglichem Material hergestellt sein, das einen geringeren Widerstand zur plastischen Verformung als der Werkstoff des Ringrades 16 oder des Lagergehäuses 18 aufweist. Beim vorliegenden Ausführungsbeispiel ist das Ringrad 16 aus gehärtetem Stahl und das Lagergehäuse 18 aus Guß hergestellt, wobei der Scherkörper aus entsprechendem weicheren Werkstoff, wie Kupfer oder Magnesium oder im vorliegenden Fall aus Aluminium hergestellt sein sollte.

Die eine Relativdrehung der vorliegenden Verbindungsvorrichtung ausschaltenden Eigenschaften entstehen beim Zusammenbau der Vorrichtung. Im einzelnen wird die Verbindungsvorrichtung derart zusammengebaut, daß der Scherkörper 42 zwischen der Verbindungsfläche 48 des Lagergehäuses 18 und der Verbindungsfläche 52 des Ringrades 16 zu liegen kommt. Damit liegen die Stirnflächen 46 und 50 des Scherkörpers 42 gegen die aufgerauhten Verbindungsflächen an dem Ringrad 16 und dem Lagergehäuse 18 an. Wenn nun an der Außenseite des Ringrades noch der Ringflansch 26 vorgesehen wird, können die Schrauben 24 durch das Lagergehäuse 18, den Scherkörper 42 und das Ringrad 16 bis in Ringflansch 26 geführt werden, wo sie eingeschraubt werden. Die Schrauben werden dann fest angezogen, wodurch das Lagergehäuse, der Scherkörper, das Ringrad und der Ringflansch fest miteinander verspannt werden. Hierbei wird der Scherkörper zwischen dem Lagergehäuse und dem Ringrad eingequetscht und die Profile an den aufgerauhten Verbindungsflächen am Ringrad und an dem Lagergerhäuse dringen dann in das weichere Material des Scherkörpers ein. Hierdurch wiederum entsteht eine mechanische Verbindung des Lagergehäuses und des Ringrades über den Scherkörper, und zwar in einer Richtung quer zu den Schrauben. Obwohl die lokalen Belastungen an den Eingriffspunkten der Profile hoch sein mögen, bleibt die gesamte Drucklast auf den Scherkörper gering, so daß eine Druckentlastung im großen Stil des Scherkörpers nicht auftritt und die Profile bzw. die Aufrauhungen voll in dem Scherkörper eingebettet verbleiben. Wenn aber eine Relativbewegung zwischen Ringrad und dem Lagergehäuse auftreten sollte, muß der Scherkörper darunter leiden. Daher ist der kleine Eingriffsbereich und die Querfläche des Scherkörpers so ausgebildet, daß sie den auftretenden Scherkräften standhalten können. Infolge des relativ großen Radius des Ringrades und des Lagergehäuses ist der Scherkörper mit einer ausreichend großen Querfläche und einem entsprechend großen Eingriffsbereich versehen, der ausreicht, um die Scherkräfte aufzufangen, die aufgrund der Torsionskräfte auf den Scherkörper einwirken können. Diese hohe Auffangkapazität des Scherkörpers ermöglicht es, daß das Drehmoment von dem Ringrad auf das Lagergehäuse ohne Relativbewegung zwischen Lagergehäuse und Ringrad übertragen wird. Im bevorzugten Ausführungsbeispiel wird die erforderliche Druckkraft, die zum Verspannen der einzelnen Teile erforderlich ist, durch den Eingriff in den Ringflansch erzielt. Da der Ringflansch in erster Linie dazu dient, das Lagergehäuse abzuschließen und zu positionieren, werden keine bedeutenden Torsionslasten zwischen dem Ringrad und dem Ringflansch übertragen. Als Ergebnis braucht daher lediglich der Scherkörper zwischen dem Ringrad und dem Lagergehäuse angeordnet zu werden.

Bei einer Demontage des Differentials, bei der das Ringrad von dem Lagergehäuse getrennt wird, wird der Scherkörper entfernt und für eine neue Montage durch einen anderen ersetzt, so daß die Profile wieder in den neuen Scherkörper eintreten können, wodurch ein sicherer Sitz ohne Relativbewegungen gegeben ist. Die Kosten für das Ersetzen des Scherkörpers sind minimal, so daß sich im Ganzen gesehen eine einfache Verbindungsvorrichtung durch das Aufrauhen der Verbindungsflächen und das Anliegen der Verbindungsflächen an einem Scherkörper ergibt. Die Profile in den Verbindungsflächen können dabei auf vielerlei Art und Weise hergestellt werden, durch Aufrauhen, durch Stemmen, durch Einfräsen u.s.w.

**Patentansprüche**

1. Verbindungsvorrichtung für mindestens zwei lösbar miteinander verspannbare Teile (Lagergehäuse 18, Ringrad 16), wobei bei wenigstens zwei Teilen die sich einander zugelegenen Verbindungsflächen (48, 52) mit Profil versehen sind, gekennzeichnet durch einen Scherkörper (42) mit im wesentlichen glatten Stirnflächen (46, 50) und einer geringeren Härte als die Profile, wobei im verspannten Zustand die Stirnflächen (46, 50) gegen die Verbindungsflächen (48, 52) anliegen und die Profile zumindest teilweise in den Scherkörper (42) eindringen.

2. Verbindungsvorrichtung nach Anspruch 1, wobei die Teile (Lagergehäuse 18, Ringrad 16) über Schrauben (24) miteinander verspannbar sind, dadurch gekennzeichnet, daß die Schrauben (24) durch den Scherkörper (42) geführt sind.

3. Verbindungsvorrichtung nach Anspruch 1, dadurch gekennzeichnet, daß die Profile im wesentlichen unverformbar und durch Aufrauhen der Verbindungsflächen (48, 52) herstellbar sind.

4. Verbindungsvorrichtung nach Anspruch 3, dadurch gekennzeichnet, daß die Rauhtiefe zwischen 500 und 1000 Mikrozoll (= 12,7 und 25,4 μ) beträgt.

5. Verbindungsvorrichtung nach einem oder mehreren der vorherigen Ansprüche, dadurch gekennzeichnet, daß die Verbindungsfläche (50) an den einen Teil als eine Radialfläche eines Ringrades (16) und die Verbindungsfläche (52) des anderen Teils als eine Gegenfläche an einem Lagergehäuse (18) für das Ringrad (16) ausgebildet ist.

6. Verbindungsvorrichtung nach Anspruch 5, dadurch gekennzeichnet, daß das Ringrad (16) an seiner dem Lagergehäuse (18) abgelegenen Seite mit einem Ringflansch (26) verspannt ist.

7. Verbindungsvorrichtung nach einem oder mehreren der vorherigen Ansprüche, dadurch gekennzeichnet, daß der Scherkörper (42) aus Aluminium hergestellt ist.

## Revendications

1. Dispositif de connexion pour au moins deux composants pouvant être assemblés de façon amovible (logement de palier 18, roue annulaire 16), les surfaces de jonction rapprochées (48, 52) présentant, dans le cas d'au moins deux composants; des profils, caractérisé par un corps de cisaillement (42) à surfaces frontales (46, 50) pratiquement lisses et d'une dureté inférieure à celle des profils, les surfaces frontales (46, 50) s'appuyant, à l'état assemblé, contre les surfaces de jonction (48, 52) et les profils pénétrant au moins partiellement dans le corps de cisaillement (42).

2. Dispositif de connexion selon la revendication 1, les composants (logement de palier 18, roue annulaire 16) pouvant être assemblés au moyen de vis (24), caractérisé en ce que les vis (24) traversent le corps de cisaillement (42).

3. Dispositif de connexion selon la revendication 1, caractérisé en ce que les profils sont pratiquement indéformables et peuvent être réalisés par grattage des surfaces de jonction (48, 52).

4. Dispositif de connexion selon la revendication 3, caractérisé en ce que la profondeur de grattage est comprise entre 500 et 1000 micropouces (12,7 et 25,4 μm).

5. Dispositif de connexion selon une ou plusieurs des revendications précédentes, caractérisé en ce que la surface de jonction (50) située sur l'un des composants se présente sous forme d'une surface radiale d'une roue annulaire (16) et la surface de jonction (52) de l'autre composant sous forme d'une contre-surface située sur un logement de palier (18) pour la roue annulaire (16).

6. Dispositif de connexion selon la revendication 5, caractérisé en ce que la roue annulaire (16) est assemblée avec une bride annulaire (26) de son coté opposé au logement de palier (18).

7. Dispositif de connexion selon une ou plusieurs des revendications précédentes, caractérisé en ce que le corps de cisaillement (42) est en aluminium.

## Claims

1. A connecting device for at least two members (bearing casing 18, ring gear 16) which can be releasably braced together, wherein, in the case of at least two members, the connceting surfaces (48, 52) which are towards each other are provided with a profile characterised by a shearing member (42) with substantially smooth end faces (46, 50) and a lower level of hardness than the profiles, wherein in the braced condition the end faces (46, 50) bear against the connecting surfaces (48, 52) and the profiles at least partially penetrate into the shearing member (42).

2. A connecting device according to claim 1 wherein the members (bearing casing 18, ring gear 16) can be braced to each other by way of screws (24) characterised in that the screws (24) are passed through the shearing member (42).

3. A connecting device according to claim 1 characterised in that the profiles are substantially non-deformable and can be produced by roughening up the connecting surfaces (48, 52).

4. A connecting device according to claim 3 characterised in that the roughness depth is between 500 and 1000 micro-inches (= 12.7 and 25.4 μ).

5. A connecting device according to one or more of the preceding claims characterised in that the connecting surface (50) on the one member is in the form of a radial surface of a ring gear (16) and the connecting surface (52) of the other member is in the form of a cooperating surface on a bearing casing (18) for the ring gear (16).

6. A connecting device according to claim 5 characterised in that the ring gear (16) is braced to an annular flange (26), at the side of the ring gear which is remote from the bearing casing (18).

7. A connecting device according to one or more of the preceding claims characterised in that the shearing member (42) is made from aluminium.

1/2

**Fig. 1**

EP 0 239 034 B1

Fig. 2

Fig. 3